# EUROPEAN PATENT APPLICATION

(11) **EP 0 786 913 A2**
(43) Date of publication of application: **30.07.1997**
(21) Application number: 97101133.3
(22) Date of filing: 24.01.1997
(51) Int. Cl.: H04Q 7/18, G08B 5/22

(54) **Radio call receiver**

(30) Priority: 26.01.1996 JP 12006/96
(71) Applicant: NEC CORPORATION, Tokyo (JP)
(72) Inventor: Ishida, Hiromichi, Kakegawa-shi, Shizuoka (JP)
(74) Representative: Baronetzky, Klaus, Dipl.-Ing.

(57) **Abstract**

A radio call receiver can be disabled by its rightful owner when it is lost or stolen. When a radio call receiver 100 receives a radio selection call signal, a decoding section 30 decodes the received data and transmits it to a control section 40. The control section 40 obtains a unique ID code and an additional address from the received data. An ID code determination section 43 compares the unique ID code to the registered ID code stored in an ID-ROM section 51. If they match and there is an additional address included in the signal, a password comparison section 42 compares the additional address to the registered password. If they match, the control section stops the functions for receiving the message in the call signal and displaying the received message.

## Description

### BACKGROUND OF INVENTION

### 1. Field of the Invention

The present invention relates to a radio call receiver, in particular, to a radio call receiver for informing a user of the call on determining that a received ID code matches a registered ID code previously registered in the device, and storing and displaying the corresponding message.

### 2. Description of the Related Art

Conventional systems for calling radio call receivers generally have the following configuration. When a caller transmits the telephone number of a called party from a telephone via a public switched network, a radio call transmitter converts the telephone number into an address signal corresponding to the unique ID code of a radio call receiver. A base station organizes as many address signals as radio call receivers to be called, and transmits the call signals with synchronization signals. Each radio call receiver initiates a call to its owner (user) if the unique ID code that is the address signal of the radio call receiver in the call signal matches the contents of its registered ID code.

A system has been proposed in order to prevent mislaid radio call receivers from being improperly used by people other than the rightful owner. Each address signal (1), ..., (n) comprises a fixed address section A that is a fixed ID code (corresponding to a telephone number) unique to a radio call receiver and an additional address section B that is a password set individually by an owner or an user. The fixed ID code is provided by a communication company. A caller inputs the telephone number of a called party and a subsequent password thereof to a radio call transmitter via a telephone and a public switched network. A radio call receiver does not carry out a message reception operation and a calling operation corresponding to the address signal unless a unique ID code and a subsequent additional address are specified in the call signal transmitted by a base station and match registered data (Japanese Patent Laid-Open Application No. 2-29036) .

The conventional radio call receivers which are intended to prevent unauthorized use have the following problems. A first problem is degraded operability on the caller side. That is, input of a telephone number (a fixed address) and the password of a called party are required to connect to a receiver. A second problem is limited service functions among systems. That is, conventional receivers cannot cope with transfer informing services from other systems that do not require the input of a password (an additional address). A third problem is imperfect security for received information. That is, if the receiver should be lost, the contents of received messages may be leaked out easily to the third person.

### SUMMARY OF THE INVENTION

It is, therefore, an object of the present invention to provide a radio call receiver that solves the above problems, which improves security in case of loss, and which also improves operability on the caller side.

A radio call receiver of the present invention comprises a decoder for decoding a received radio selection call signal to detect an ID code, an additional address and a message, a memory for storing a registered ID code, and a control means. The control means compares said detected ID code to said registered ID code, compares a password of an additional address added to said ID code to an registered password in case that said decoder detects said additional address, and disables the receiver when the two passwords coincide with each other.

A receiving method of the present invention comprises the following steps. First, a received radio selection call signal is decoded, and an ID code and a message are detected, said ID code is compared to a registered ID code, it is checked whether an additional address added to said ID code has been received, and a password in said additional address is compared to an registered password. Thereafter, the receiver is disabled if the two passwords coincide with each other.

In this receiver and receiving method, if the receiver is lost, then a user easily protect stored information.

### BRIEF DESCRIPTION OF THE DRAWINGS

The above and other objects, features and advantages of the present invention will become apparent from the following detailed description taken with reference to the accompanying drawing in which :

FIG.1 is a functional block diagram showing one embodiment of this invention.

FIG.2 is a flowchart showing the operation of one embodiment of this invention.

FIG.3 is a functional block diagram showing a variation of the control section shown in FIG.1.

FIG.4 shows one embodiment of radio selection call signal format.

### DESCRIPTION OF THE PREFERRED EMBODIMENTS

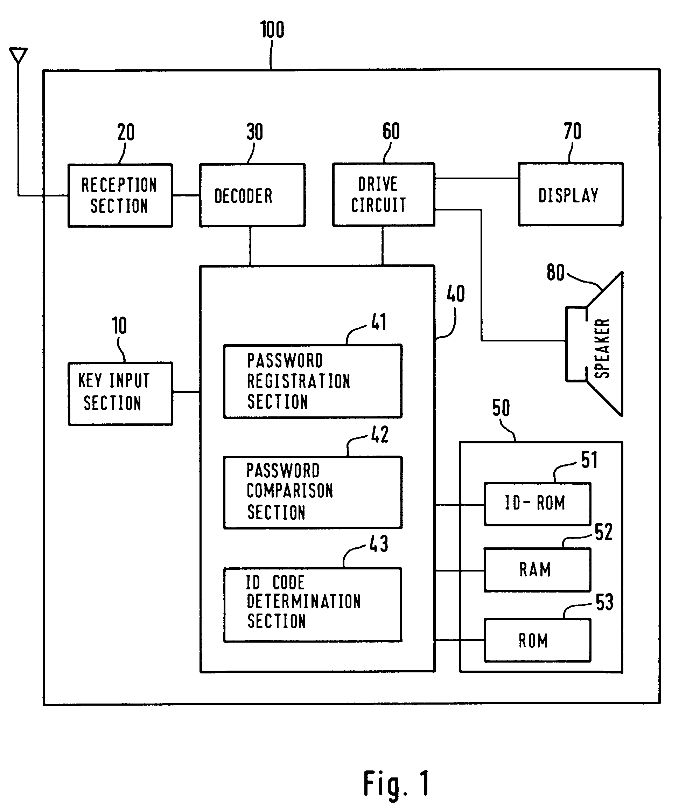

FIG.1, a radio call receiver 100 comprises a key input section 10 with which a user performs setting operations; a receiving section 20 for receiving radio signals; a decoding section 30 for decoding received signal data; a control section 40; a memory section 50; a display section 70 for displaying messages; a speaker 80 that generates sounds; and a drive circuit 60 for driving these peripheral devices in accordance with the control section 40. The control section 40 monitors and controls the overall device, and includes a password registration section 41 for accepting the registration of passwords and for storing them, a password comparison section 42 for determining whether or not an additional address and a registered password match, and an ID code determination section 43 for determining whether or not a unique ID code and a registered ID code match. The memory section 50 includes an ID-ROM section 51 for storing various parameter information such as registered ID codes, a RAM 52 for storing received messages, and a ROM 53 for storing control software information for the operation of the control section 40.

The owner can arbitrarily register a password by executing setting and registration operations from the key input section 10. The password registration section 41 accepts and registers the password. The accepted password may be stored in the memory section 50. An ID code (a unique ID code) is registered in advance by the communication company using a well-known appropriate technique. Whether or not an ID code has been registered can be known from a registration ID status provided in the ID-ROM section 51. The owner's contact number can be registered in the ID-ROM section 51.

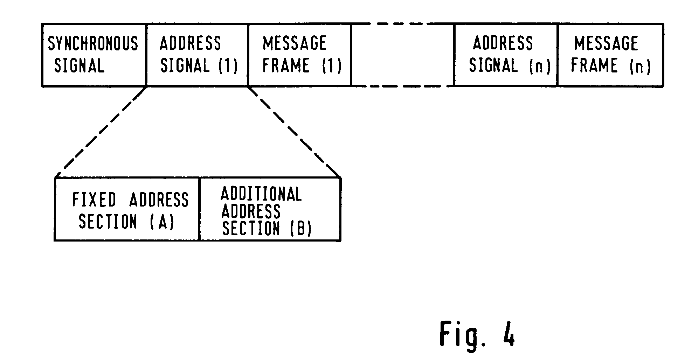

A call signal on a radio line for calling the radio call receiver 100 includes the telephone number of a called party who is the owner, that is, a unique ID code. An additional address may be added to the call signal as shown in FIG.4. The reception section 20 receives the call signal on the radio line and obtains the unique ID code, the additional address (if any) and a message. The decoder 30 decodes the received data and transmits it to the control section 40.

The control section 40 checks whether an ID code is registered in the ID-ROM 51, and if so, constantly monitors the unique ID code transmitted by the base station via the reception section 20 and the decoder 30. On detecting the unique ID code in the received data, the control section 40 checks whether or not it includes an additional address, and if not, determines that the call is of a normal type. The ID code determination section 43 determines whether or not the ID code matches the registered ID code stored in the ID-ROM section 51. If they match, the control section 40 receives the message corresponding to the ID code of the receiver which is contained in the call signal, and controls the drive circuit 60, the display section 70, and the speaker 80 so as to initiate a call notifying operation including the display of the received message. The received message can be stored in the RAM 52 and displayed on the display section 70 at any desired time by the operation of the key input section 10.

If the received data includes an additional address, the password comparison section 42 determines whether or not the address matches the password registered in the password registration section 41. If they match, the control section 40 determines that this is a protect instruction for preventing unauthorized use, and provides a read inhibition protect for the registered ID code in the ID-ROM section 51 (that is, the ID code is masked so that it cannot be read) to disable the ID code (that is, stop the message reception and display functions). The control means can be set in microprocessor.

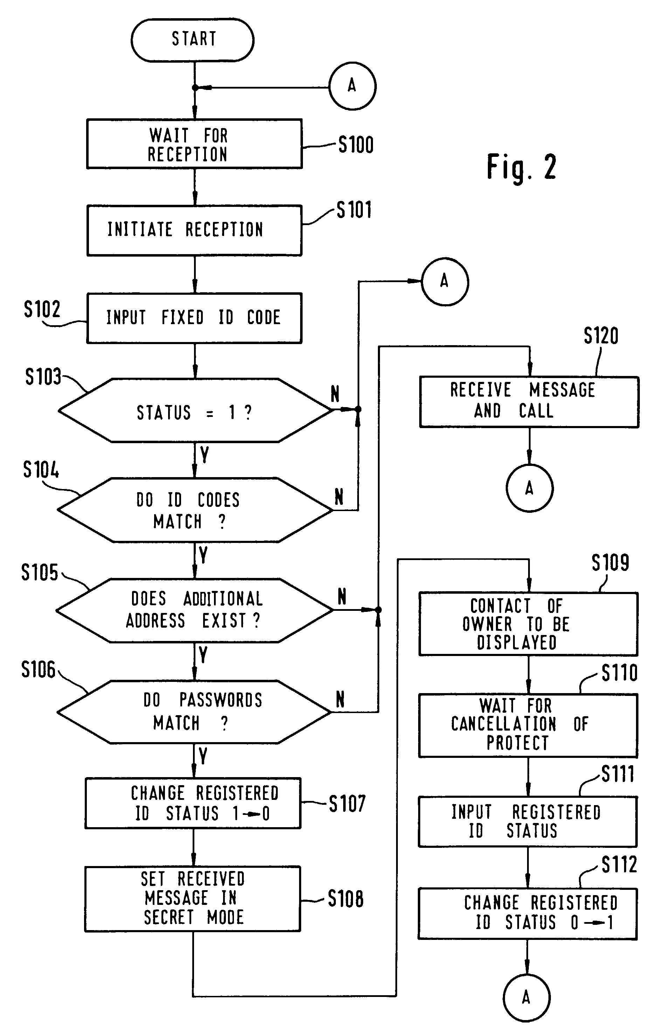

Next, an operation performed to prevent unauthorized use according to this invention is described in detail with reference to FIG. 1 and FIG. 2.

The owner of the radio call receiver 100 operates the key input section 10 in advance to input a password to the control section 40 in order to register it in the password registration section 41. To change the registered password, the owner inputs a new password with the current password. If the receiver should be lost or stolen and obtained by a third party, the rightful owner will use a telephone to access a radio call transmitter via a public switched network, input his or her password as the additional address in addition to his or her unique ID code which is conventionally used in a call signal, and transmit the data to the radio call receiver 100 via a radio line.

In the radio call receiver 100, the reception section 20 prepares to receive the call signal on the radio line, establishes synchronization by detecting a synchronizing signal, and then transfers to a reception initiation mode (steps S100 and S101 in FIG. 2) . The decoder 30 decodes and converts the data received by the receiving section 20, and then sends it to the control section 40. The control section 40 obtains the unique ID code and the additional address from the received data (step S102). If an ID code is registered in the ID-ROM section 51 of the memory section 50, that is, the registration ID status is "1" (step S103), the ID code determination section 43 determines whether or not the registered ID code stored in the ID-ROM section 51 matches the received unique ID code (step S104). If there is not an ID code registered or the ID codes do not match, the control section 40 returns to a reception waiting state. If the ID codes match, the control section 40 determines that this is a call to the receiver, and causes the password comparison section 42 to compare the input additional address, if any, to the password stored in the password registration section 41 (steps S105 and S106). If there is not an additional address input or the address and the password do not match, the control section performs a normal operation (step 120). This normal calling operation is a well known technique, and its detailed description is omitted. If an additional address has been transmitted from the caller and it matches the password for the receiver, the control section 40 determines that the message includes a "protect instruction" and forces the registered ID status to be set to "0" (no registration; protect state), thereby disabling the comparison to subsequent unique ID codes (step S107). The control section 40 simultaneously sets the contents of the message in a secret mode to prevent the leakage of the received message stored in the device (step S108) and displays on the display screen 70 the owner's contact number registered in the ID-ROM section 51 (step S109). After that, the control section 40 shifts to a protect cancellation waiting mode (step S110). The owner's contact number is displayed, so if the receiver should be lost, it is likely that it will be returned to the owner.

If the receiver is returned to the rightful owner and when the owner inputs the registered password from the key input section 10 (step S111), the control section 40 detects that the input password matches the password registered in the password registration section 41, and cancels the "protect state", that is, sets the registered ID status to "1". This enables the reception of subsequent call signals (display of received message) (step S112).

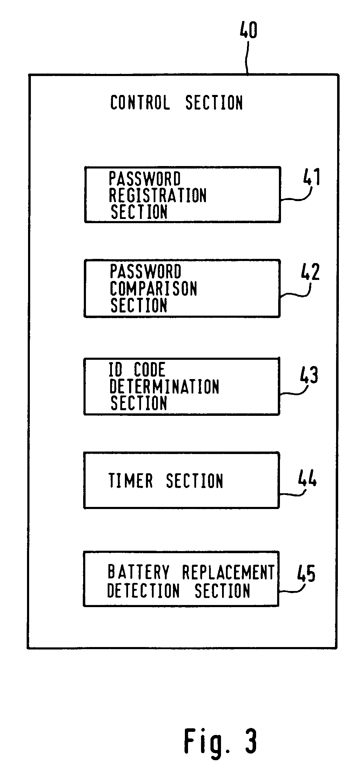

Next, a second embodiment of this invention is described in detail. FIG.3 is a block diagram of a variation of the control section 40 according to this invention. In addition to the password registration section 41, the password comparison section 42, and the ID code determination section 43, the control section 40 has a timer section 44 for managing time and a battery replacement detection section 45 for monitoring the replacement of a battery. The timer section 44 monitors the operation of switches in the key input section 10 over a specified period of time. If no switch operation has been performed over the specified period of time, the control section 40 masks the registered ID code in the ID-ROM section 50 so that it cannot be read (registered ID status = 0). Thereby, the reception and display of message are inhibited. The specified period of time is, for example, from several hours to several days.

The battery exchange detection section 42 monitors the condition of the battery (not shown), and detects whether it has been replaced). When the battery is replaced, the control section 40 masks the registered ID code in the ID-ROM section 51 (registered ID status = 0) so that it cannot be read.

These functions can prevent the receiver from receiving and displaying messages, even though the owner does not know that the receiver has been lost. In this case, the rightful owner can use the receiver again by inputting the registered password. That is, the control section 40 causes the password comparison section 42 to determine whether or not the password input from the key input section matches the password registered in the password registration section 41, and if they match, returns the registered ID status to "1".

On detecting that the ID code in the radio selection call signal matches the ID code previously registered in the device, the radio call receiver according to this invention determines that the call is to the receiver and stores and displays the corresponding message. A password is registered in advance (a registered password), and an additional address is added to the ID code in the radio selection call signal. If this additional address matches the registered password, the registered ID code of the receiver is invalidated (protect state), and the reception and display of the message are prohibited. Thus, in normal operations, the caller (the sender) is required to input only the telephone number (the fixed address) of the receiver corresponding to the ID code to prevent operability from being degraded. This receiver can deal with transfer informing services from other systems that do not require the input of a password (an additional address). If the receiver should be lost or stolen, the rightful owner can send via remote control a radio selection call signal including the registered password as the additional address to disable the receiver. The user thereby prevents the contents of the received message from being leaked to a third party, in order to protect the owner's data and privacy (to improve security).

Even though the owner does not know that the receiver has been lost, the owner's data and privacy can be protected by setting the registered ID in the protect state by executing timing control. That is, the receiver becomes disabled when the timer means detects that no key operation has been performed over a specified period of time or when the battery replacement detection means detects that the battery has been replaced due to its exhaustion.

While the present invention has been described in connection with certain preferred embodiments, it is to be understood that the subject matter encompassed by the present invention is not limited to those specific embodiments. On the contrary, it is intended to include all alternatives, modifications and equivalents as can be included within the spirit and scope of the following claims.

## Claims

1. A radio call receiver for displaying a message comprising:
a decoder for decoding a received radio selection call signal to detect an ID code, a password and a message;
a memory for storing a registered ID code; and
control means for (a) comparing said detected ID code to said registered ID code, (b) comparing said password to a preset password, and (c) disabling said receiver if said two passwords are the same.

2. The radio call receiver as claimed in claim 1, wherein said control means prevents said registered ID code from being read from said memory when said two passwords coincide with each other.

3. The radio call receiver as claimed in claim 1, wherein said control means prevents said message from being displayed when said two passwords coincide with each other.

4. The radio call receiver as claimed in claim 1, wherein said control means stores said preset password.

5. The radio call receiver as claimed in claim 1, wherein said memory stores said preset password.

6. The radio call receiver as claimed in claim 1, wherein said control means further comprises means for disabling said receiver when no input operation has been performed for a predetermined period of time.

7. The radio call receiver as claimed in claim 1, wherein said control means disables said receiver when a battery has been replaced.

8. The radio call receiver as claimed in claim 1, further comprising means for entering said preset password.

9. The radio call receiver as claimed in claim 1, wherein said control means further comprises means for restoring normal operation of said receiver responsive to input of said preset password via said entering means.

10. A receiving method of radio selective call signal, comprising the steps of:
decoding a received radio selection call signal to detect an ID code, and a message;
comparing said ID code to a registered ID code;
checking whether a password added to said ID code has been received;
comparing said password to a preset password; and
disabling said receiver when said two passwords are the same.

11. The receiving method as claimed in claim 10, further comprising the step of:
preventing any stored message from being displayed after said disabling step.

12. The receiving method as claimed in claim 10, further comprising the step of:
displaying information about an owner after said disabling step.

13. The receiving method of radio selective call signal as claimed in claim 10, further comprising the step of:
restoring operation of said receiver upon input of said preset password.
